# NEUE EUROPÄISCHE PATENTSCHRIFT

(11) **EP 1 703 472 B2**
(45) Veröffentlichungstag und Bekanntmachung des Hinweises auf die Entscheidung über den Einspruch: **24.09.2014**
(45) Hinweis auf die Patenterteilung: 03.06.2009
(21) Anmeldenummer: 05005760.3
(22) Anmeldetag: 16.03.2005
(51) Int. Cl.: G07C 9/00, B60R 25/00

(54) **Zugangskontrollsystem**
Access control system
Système de contrôle d'accès

(43) Veröffentlichungstag der Anmeldung: 20.09.2006
(73) Patentinhaber: Delphi Technologies, Inc., Troy, MI 48007 (US)
(72) Erfinder: Hildebrand, Carsten, 42115 Wuppertal (DE); Langenbach, Julia, Dr., 57482 Wenden (DE); Lambrecht, Karl-Friedrich, 58566 Kierspe (DE)
(74) Vertreter: Manitz, Finsterwald & Partner GbR

(56) Entgegenhaltungen:
- EP-A- 1 189 306
- DE-A1- 4 329 697
- US-A- 5 552 641
- US-B1- 6 710 471
- US-B1- 6 867 686
- ANATE ACCESS-TRAKKER FREQUENTLY ASKED QUESTIONS, [Online] 2004, XP002327136 Gefunden im Internet: URL:<http://www.aitechnology.com/smartcard lockwebsite/faq.asp>> [gefunden am 2005-05-02]

## Beschreibung

Die Erfindung betrifft ein Zugangskontrollsystem insbesondere für Fahrzeuge, mit einer zugangsseitigen Steuereinrichtung, einer benutzerseitigen Identifikationseinrichtung und einem der Steuereinrichtung zugeordneten Tranceiver für eine bidirektionale drahtlose Kommunikation mit der Identifikationseinrichtung. Ein Zugangskontrollsystem dieser Art ist in der US 5 552 641 beschrieben.

Ein solches Zugangskontrollsystem kommt in der Regel dort zum Einsatz, wo es um die Überprüfung geht, ob eine jeweilige Person als Inhaber einer jeweiligen Identifikationseinrichtung autorisiert ist, die betreffende Zugangskontrolleinrichtung zu passieren. Dies gilt sowohl für ortsfeste Zugangskontrolleinrichtungen, zu denen nur ein ausgewählter Personenkreis Zutritt hat, als auch für mobile Zugangskontrolleinrichtungen, insbesondere bei Fahrzeugen, wie Kraftfahrzeugen, Schiffen oder Fahrrädern. Mit den betreffenden Zugangskontrolleinrichtungen soll hier insbesondere einem Diebstahl des Fahrzeuges entgegengewirkt werden.

Ein jeweiliges Zugangskontrollsystem kann insbesondere als sogenanntes schlüsselloses Zugangssystem und/oder schlüsselloses Startsystem für Fahrzeuge vorgesehen sein. Es umfasst in diesem Fall ein dem Fahrzeug zugeordnetes elektronisches Steuergerät, welches in der Regel dauerhaft mit Energie versorgt ist, und die mobilen Identifikationseinrichtungen, die einen jeweiligen autorisierten Benutzer identifizieren sollen. Dabei kann eine jeweilige Identifikationseinrichtung selbst Teil eines Fahrzeugschlüssels sein, der mit der Steuereinrichtung im Bereich der Schließ- und/oder Startanlage des Fahrzeuges in vorzugsweise bidirektionalem Datenaustausch steht. Die jeweiligen Identifikationseinrichtungen können insbesondere auch in Chipkarten oder dergleichen integriert und beispielsweise als Transponder ausgeführt sein. Solche Transponder weisen keine eigene Energieversorgung auf, sie werden vielmehr bei einer Annäherung der Identifikationseinrichtung an die Steuereinrichtung drahtlos mit Energie versorgt und im weiteren automatisch zur Übertragung der Authentisierungsantwortsignale angesprochen.

Bei den bisher üblichen Zugangskontrollsystemen der eingangs genannten Art werden zwei Frequenzen verwendet, eine für die Datenübertragung sowie die Weckfunktion ausgehend vom Fahrzeug, und eine für die Datenübertragung ausgehend von der Identifikationseinrichtung zurück zum Fahrzeug.

Die Datenübertragungsrate ist üblicherweise kleiner oder gleich 10 kbps für die Datenübertragung zwischen einem Fahrzeug und einer Identifikationseinrichtung.

Für die Datenübertragung zwischen einer Identifikationseinrichtung und einem Fahrzeug wird bisher unabhängig davon, ob sich die Identifikationseinrichtung innerhalb oder außerhalb des Fahrzeugs befindet, ein und dieselbe Signalamplitude verwendet.

Bei den bisher üblichen Zugangskontrollsystemen ist auch kein angemessener Schutz gegen einen sogenannten Relais-Angriff vorgesehen, bei dem die Kommunikationsstrecke zwischen der Identifikationseinrichtung und dem Fahrzeug durch Unbefugte verlängert wird.

Die bisherigen Schlüsselanhänger sind batteriebetrieben, was den Nachteil mit sich bringt, dass nur eine begrenzte Batterie-Lebenszeit vorliegt.

Die bisher üblichen Zugangskontrollsysteme besitzen also eine Reihe von Nachteilen, die sich insbesondere im Preis sowie im Bedienungskomfort auswirken. Da die Batterie-Lebenszeit begrenzt ist, ist eine Back-up-Einrichtung erforderlich, die es dem Benutzer erlaubt, auch im Fall einer leeren Batterie in das Fahrzeug zu gelangen und dieses zu starten. Die entsprechende Back-up-Einrichtung erhöht nun aber die Kosten und verringert den Komfort. Die für eine HF-Datenübertragung verwendeten Frequenzen sind in den verschiedenen Ländern aufgrund der verschiedenen gesetzlichen Regelungen unterschiedlich. Zudem bringt die Verwendung zweier Frequenzen höhere Systemkosten mit sich. Es stehen zwar Technologien zur Verfügung, die einen Schutz gegen einen sogenannten Relais-Angriff zur Verlängerung des HF-Kanals gewährleisten. Der NF-Kanal bleibt jedoch ungeschützt und ermöglicht einen Relais-Angriff mit einer einfachen Relais-Station innerhalb des HF-Kommunikationsbereichs (etwa 30 m).

Bei dem aus der US 5 552 641 bekannten Zugangskontrollsystem umfasst der Transponder der benutzerseitigen Identifikationseinrichtung zwar eine Batterie, der Transponder wird jedoch erst dann durch die zugangsseitige Steuereinrichtung mit Energie versorgt, wenn diese Batterie leer ist. Zudem wird gegebenenfalls bereits mit dem Wecksignal die gesamte für eine vollständige Rückantwort durch die Identifikationseinrichtung erforderliche Energie übertragen.

Bei einem anderen, in der EP 1 189 306 A1 beschriebenen Zugangskontrollsystem der eingangs genannten Art wird für die von der zugangsseitigen Steuereinrichtung ausgehende Kommunikation beispielsweise eine Frequenz von 13,56 MHz verwendet. Für die bidirektionale Kommunikation zwischen der zugangsseitigen Steuereinrichtung und der benutzerseitigen Identifikationseinrichtung kann insbesondere auch nur eine einzige Frequenz verwendet werden, die in diesem Fall bei 434 MHz liegt.

Bei einem weiteren, aus der US 6 710 473 B1 bekannten Zugangskontrollsystem der eingangs genannten Art sind zugangsseitig zwei zueinander orthogonal angeordnete Antennen zur Erzeugung eines rotierenden Magnetfeldes vorgesehen.

Der Erfindung liegt die Aufgabe zugrunde, ein verbessertes Zugangskontrollsystem der eingangs genannten Art zu schaffen, bei dem die genannten Probleme beseitigt sind.

Diese Aufgabe wird nach der Erfindung dadurch gelöst, dass der benutzerseitigen Identifikationseinrichtung für die bidirektionale drahtlose Kommunikation mit der zugangsseitigen Steuereinrichtung ein semipassiver, sequentieller Transponder zugeordnet ist, der ebenso wie ein herkömmlicher Transponder über die zugangsseitige Steuereinrichtung mit Energie versorgt wird, dessen Sendeleistung im Vergleich zur Sendeleistung eines solchen herkömmlichen Transponders jedoch durch Energiespeichermittel oder dergleichen insbesondere für eine so genannte aktive Kommunikation erhöht ist.

Vorteilhafterweise wird für die bidirektionale drahtlose Kommunikation zwischen der zugangsseitigen Steuereinrichtung und der benutzerseitigen Identifikationseinrichtung eine einzige Frequenz, vorzugsweise eine Frequenz im Bereich von 13,56 MHz, verwendet.

Die Frequenz 13,56 MHz stellt einen Kompromiss zwischen den Eigenschaften der herkömmlichen NF-Frequenz (125 KHz) und den Eigenschaften der HF-Frequenz dar. Die sich ergebende Kommunikationsreichweite deckt das Innere eines Fahrzeugs sowie einen Bereich bis zu 2 m im Bereich um das Fahrzeug ab. Es ist eine vollständig schlüssellose (KLC) Funktionsweise gewährleistet, wobei eine Fernsteuerfunktion (RKE = remote controller function) jedoch nicht möglich ist.

Die Energiespeichermittel können wenigstens eine wiederaufladbare Batterie und/oder wenigstens einen Kondensator umfassen.

Der semipassive Transponder kann grundsätzlich für eine beliebige Frequenz bzw. einen beliebigen Frequenzbereich vorgesehen sein. Gemäß einer zweckmäßigen praktischen Ausführungsform des erfindungsgemäßen Zugangskontrollsystems arbeitet der semipassive Transponder für die bidirektionale drahtlose Kommunikation mit der Steuereinrichtung jedoch bei einer einzigen Frequenz, vorzugsweise einer Frequenz im Bereich von 13,56 MHz.

Bisher waren für Fahrzeuge zwei prinzipiell unterschiedliche Transponder-Systeme vorgesehen, nämlich sogenannte passive Transponder (Immobilizer)-Systeme, die keine Batterie verwenden, und aktive Fernsteizersysteme, die eine Batterie erfordern.

Ein semipassiver Transponder kombiniert nun die Vorteile beider Systeme. Er bedarf ebenso wie ein herkömmlicher Transponder keiner Batterie, besitzt jedoch die Kommunikationsreichweite eines aktiven Systems. Er erhält die Energie vom Fahrzeug in der gleichen Art wie ein herkömmlicher Transponder. Diese Energie wird in dem semipassiven Transponder jedoch gespeichert, um danach für eine aktive Datenübertragung in Richtung des Fahrzeugs verwendet zu werden. Eine aktive Kommunikation erhöht die Kommunikationsreichweite im Vergleich zu einem "herkömmlichen" Transponder. Die Energie kann beispielsweise in einer wiederaufladbaren Batterie oder in einem Kondensator gespeichert werden. Für ein entsprechendes Energieübertragungsmanagement wird anstatt einer Übertragung und Speicherung eines Energieanteils, der groß genug ist, eine oder mehrere vollständige Kommunikationsvorgänge zu gewährleisten, erfindungsgemäß eine sequentielle Betriebsart verwendet, bei der zunächst Energie, dann Daten, dann wieder Energie, usw. übertragen werden.

Ein Beispiel für die Verwendung eines semipassiven Transponders für eine vollständig schlüssellose (KLC) Anwendung könnte beispielsweise wie folgt aussehen:

Ein Fahrzeug enthält eine bestimmte Anordnung mit einer Antennenschleife, die sowohl einen Burst hoher Energie für die Aufladesequenz als auch einen Datenübertragungsabschnitt der Kommunikation hoher Geschwindigkeit und geringer Sendeleistung ermöglicht. Die Kommunikation beginnt mit einem Aufweck-Muster, das von einer der Fahrzeugantennen gesendet wird, nachdem an einem Türgriff gezogen wurde. Danach wird die Energie mit sehr hoher Sendeleistung mit einem schmalbandigen Burst mittels einer entsprechenden Antennenanordnung des Fahrzeugs übertragen. Die gespeicherte Energie wird dazu verwendet, die Datenstation für die Datenaustausch-Sequenz bei sehr geringer Energie und großer Bandbreite mit einem Träger gleicher Frequenz zu versorgen. Die große Bandbreite ermöglicht das Aussenden sowie das Empfangen von Daten mit einer sehr hohen Datenrate sowie die Verwendung eines Breitbandspektrum-Protokolls.

Die Funktion des semipassiven Transponders ist generell nicht auf eine bestimmte Frequenz beschränkt. Bevorzugt wird ein solcher semipassiver Transponder jedoch bei einer Frequenz im Bereich von 13,56 MHz eingesetzt.

Von Vorteil ist insbesondere auch, wenn für die bidirektionale drahtlose Kommunikation zwischen der Steuereinrichtung und der Identifikationseinrichtung ein Breitbandspektrum bei einer Trägerfrequenz von vorzugsweise 13,56 MHz oder ein Frequenzsprungverfahren verwendet wird.

Es kann also insbesondere ein Breitbandspektrum-Algorithmus für eine Kommunikation bei vorzugsweise 13,56 MHz, zum Beispiel das DSSS-Protokoll, verwendet werden. Ein solches Protokoll gewährleistet eine höhere Datensicherheit und erhöht die Unempfindlichkeit gegenüber Interferenzen. Es können beispielsweise auch Kommunikationsprotokolle verwendet werden, die für 2,4 GHz-Kommunikationsstandards wie z.B. das Frequenzsprungverfahren entwickelt wurden.

Derzeit sind schlüssellose Systeme mit einer Back-up-Funktion versehen, um den Fahrzeugmotor auch in dem Fall starten zu können, dass die Batterie leer ist. Normalerweise sind eine zusätzliche Antenne in dem Fahrzeug und eine besondere Andock-Position für die Identifikationseinrichtung erforderlich. Ein weiterer Nachteil der herkömmlichen Zugangskontrollsysteme besteht darin, dass der Fahrer wissen muss, was in diesem speziellen Fall zu tun ist und die Betriebsanleitung zu Rate ziehen muss. Andernfalls kann er das Fahrzeug nicht starten.

Gemäß einer bevorzugten praktischen Ausführungsform des erfindungsgemäßen Zugangskontrollsystems erfolgt nun bei sich außerhalb des Fahrzeugs befindlicher Identifikationseinrichtung eine aktive Kommunikation mit relativ höherer Sendeleistung, während bei sich innerhalb des Fahrzeugs befindlicher Identifikationseinrichtung sowohl eine aktive Kommunikation als auch eine passive Kommunikation mit relativ geringerer Sendeleistung erfolgen kann.

Es kann also insbesondere eine automatische Back-up-Funktion vorgesehen sein, die durch den Fahrer selbst dann nicht wahrnehmbar ist, wenn die sequentielle Kommunikation nicht funktioniert (defekter Kondensator usw.). Für diesen Zweck ist überall innerhalb des Fahrzeugs eine passive Kommunikation möglich.

Gemäß einer weiteren bevorzugten praktischen Ausführungsform des erfindungsgemäßen Zugangskontrollsystems sind Mittel vorgesehen, um im Innern des Fahrzeugs ein rotierendes dreidimensionales Magnetfeld zu erzeugen.

Es können also rotierende magnetische Felder gebildet werden, um in dem Fahrzeug eine Art dreidimensionales Feld zu erzeugen. Ein solches Verfahren ist an sich für 13,56 MHz-Anwendungen bekannt, es wurde bisher jedoch noch nicht in Fahrzeugen angewandt. Ein dreidimensionales Feld im Innern des Fahrzeugs ermöglicht beispielsweise die Kommunikation mit einem eindimensionalen Transponder, beispielsweise für die Back-up-Funktion. Überdies bringt es auch bezüglich eines Schutzes gegenüber Relais-Stationen Vorteile.

Der benutzerseitigen Identifikationseinrichtung ist vorteilhafterweise ein dreidimensionaler, vorzugsweise bei einer Frequenz im Bereich von 13,56 MHz arbeitender Empfänger zugeordnet.

Die Verwendung eines dreidimensionalen Empfängers in einer Identifikationseinrichtung stellt die Kommunikation außerhalb des Fahrzeugs sicher, wo die Erzeugung eines dreidimensionalen Magnetfeldes nicht möglich ist.

Eine weitere bevorzugte praktische Ausführungsform des erfindungsgemäßen Zugangskontrollsystems zeichnet sich dadurch aus, dass insbe-sondere im Fall der Verwendung eines Breitbandspektrums zum Schutz gegen den Einsatz einer oder mehrerer Relay-Stationen durch Unbefugte Mittel für eine Laufzeitmessung vorzugsweise entsprechend einer Frequenz im Bereich von 13,56 MHz vorgesehen sind.

Eine der Möglichkeiten für einen Schutz gegen den Einsatz einer oder mehrerer Relais-Stationen besteht also in einer solchen Laufzeitmessung z. B. bei 13,56 MHz. Dabei können insbesondere die Vorteile von Breitband-Protokollen (Breitbandsignal) genutzt werden.

Die Verwendung eines rotierenden Magnetfeldes im Innern des Fahrzeugs bringt es mit sich, dass das Feld besondere geometrische Eigenschaften besitzt und zeitabhängig ist. Gemäß einer weiteren bevorzugten praktischen Ausführungsform des erfindungsgemäßen Zugangskontrollsystems sind daher Mittel zum Schutz gegen den Einsatz einer oder mehrerer Relais-Stationen durch Unbefugte vorgesehen, die auf bestimmten geometrischen und zeitlichen Eigenschaften des im Innern des Fahrzeugs erzeugten rotierenden dreidimensionalen Magnetfeldes basieren.

Eine Verwendung standardisierter Übertragungsprotokolle (zum Beispiel ISO15693 oder ISO14443) bietet die Möglichkeit, beispielsweise einen Schlüsselanhänger als Interface zu einem nicht automatischen Zugangssystem zu verwenden.

Das erfindungsgemäße Zugangskontrollsystem bringt also eine Reihe von Vorteilen mit sich. So führt die Verwendung einer einzigen Frequenz zu einer Verringerung der Gesamtsystemkosten. Eine weltweite Verwendung der gleichen Frequenz bringt auch für die Erstausrüster eine höhere Flexibilität sowie eine Kostenverringerung mit sich. Es ist ein zuverlässigerer Schutz gegenüber einem unbefugten Einsatz von Relais-Stationen gewährleistet. Das System zum Schutz gegen einen Abfall der Batterieleistung bringt einen höheren Komfort für den Benutzer mit sich. So treten keinerlei Probleme im Zusammenhang mit der Batterie-Lebenszeit mehr auf. Die automatische Back-up-Funktion bedeutet auch einen höheren Komfort sowie eine bessere Funktionalität.

Wie bereits erwähnt, kann der semipassive Transponder grundsätzlich auch bei einer beliebigen Frequenz bzw. in einem beliebigen Frequenzbereich arbeiten. Die Erfindung betrifft daher allgemein ein Zugangskontrollsystem insbesondere für Fahrzeuge, mit einer zugangsseitigen Steuereinrichtung, einer benutzerseitigen Identifikationseinrichtung und einem der Steuereinrichtung zugeordneten Tranceiver für eine bidirektionale drahtlose Kommunikation mit der Identifikationseinrichtung, das dadurch gekennzeichnet ist, dass der benutzerseitigen Identifikationseinrichtung für die bidirektionale drahtlose Kommunikation mit der zugangsseitigen Steuereinrichtung ein semipassiver, sequentieller Transponder zugeordnet ist, der ebenso wie ein herkömmlicher Transponder über die zugangsseitige Steuereinrichtung mit Energie versorgt wird, dessen Sendeleistung im Vergleich zur Sendeleistung eines solchen herkömmlichen Transponders jedoch durch Energiespeichermittel oder dergleichen insbesondere für eine so genannte aktive Kommunikation erhöht ist.

## Patentansprüche

1. Zugangskontrollsystem insbesondere für Fahrzeuge, mit einer zugangsseitigen Steuereinrichtung, einer benutzerseitigen Identifikationseinrichtung und einem der Steuereinrichtung zugeordneten Tranceiver für eine bidirektionale drahtlose Kommunikation mit der Identifikationseinrichtung,
**dadurch gekennzeichnet,**
**dass** der benutzerseitigen Identifikationseinrichtung für die bidirektionale drahtlose Kommunikation mit der zugangsseitigen Steuereinrichtung ein semipassiver, sequentieller Transponder zugeordnet ist, der ebenso wie ein herkömmlicher Transponder über die zugangsseitige Steuereinrichtung mit Energie versorgt wird, dessen Sendeleistung im Vergleich zur Sendeleistung eines solchen herkömmlichen Transponders jedoch durch Energiespeichermittel oder dergleichen für eine so genannte aktive Kommunikation erhöht ist, wobei bei sich außerhalb des Fahrzeugs befindlicher Identifikationseinrichtung eine aktive Kommunikation mit relativ höherer Sendeleistung erfolgt, während bei sich innerhalb des Fahrzeugs befindlicher Identifikationseinrichtung sowohl eine aktive Kommunikation als auch eine passive Kommunikation mit relativ geringerer Sendeleistung erfolgen kann.

2. Zugangskontrollsystem nach Anspruch 1,
**dadurch gekennzeichnet ,**
**dass** für die bidirektionale drahtlose Kommunikation zwischen der zugangsseitigen Steuereinrichtung und der benutzerseitigen Identifikationseinrichtung eine einzige Frequenz, vorzugsweise eine Frequenz im Bereich von 13,56 MHz, verwendet wird.

3. Zugangskontrollsystem nach Anspruch 2,
**dadurch gekennzeichnet,**
**dass** die Energiespeichermittel wenigstens eine wieder aufladbare Batterie umfassen.

4. Zugangskontrollsystem nach Anspruch 2 oder 3,
**dadurch gekennzeichnet ,**
**dass** die Energiespeichermittel wenigstens einen Kondensator umfassen.

5. Zugangskontrollsystem nach einem der Ansprüche 2 bis 4,
**dadurch gekennzeichnet,**
**dass** der semipassive Transponder für die bidirektionale drahtlose Kommunikation mit der Steuereinrichtung bei einer einzigen Frequenz, vorzugsweise einer Frequenz im Bereich von 13,56 MHz, arbeitet.

6. Zugangskontrollsystem nach einem der Ansprüche 2 bis 5,
**dadurch gekennzeichnet ,**
**dass** für die bidirektionale drahtlose Kommunikation zwischen der Steuereinrichtung und der Identifikationseinrichtung ein Breitbandspektrum bei einer Trägerfrequenz von vorzugsweise 13,56 MHz oder ein Frequenzsprungverfahren verwendet wird.

7. Zugangskontrollsystem nach einem der Ansprüche 2 bis 6,
**dadurch gekennzeichnet ,**
**dass** Mittel vorgesehen sind, um im Innern des Fahrzeugs ein rotierendes dreidimensionales Magnetfeld zu erzeugen.

8. Zugangskontrollsystem nach einem der Ansprüche 2 bis 7,
**dadurch gekennzeichnet ,**
**dass** der benutzerseitigen Identifikationseinrichtung ein dreidimensionaler, vorzugsweise bei einer Frequenz im Bereich von 13,56 MHz arbeitender Empfänger zugeordnet ist.

9. Zugangskontrollsystem nach einem der Ansprüche 2 bis 8,
**dadurch gekennzeichnet ,**
**dass** insbesondere im Fall der Verwendung eines Breitbandspektrums zum Schutz gegen den Einsatz einer oder mehrerer Relay-Stationen durch Unbefugte Mittel für eine Laufzeitmessung vorzugsweise entsprechend einer Frequenz im Bereich von 13,56 MHz vorgesehen sind.

10. Zugangskontrollsystem nach einem der Ansprüche 2 bis 9,
**dadurch gekennzeichnet,**
**dass** Mittel zum Schutz gegen den Einsatz einer oder mehrerer Relay-Stationen durch Unbefugte vorgesehen sind, die auf bestimmten geometrischen und zeitlichen Eigenschaften des im Innern des Fahrzeugs erzeugten rotierenden dreidimensionalen Magnetfeldes basieren.

## Claims

1. Access control system, in particular for vehicles, with an access-side control device, a user-side identification device and a transceiver assigned to the control device for a bidirectional wireless communication with the identification device,
**characterized in that**
the user-side identification device, for the bidirectional wireless communication with the access-side control device, has assigned a semi-passive sequential transponder, powered just as a conventional transponder through the access-side control device, whose transmitting power in comparison to the transmitting power of such a conventional transponder is increased by power storage means or the like for a so called active communication, whereby for an identification device located outside the vehicle an active communication occurs with relatively higher transmitting power, whereas for an identification device located inside the vehicle both an active communication and a passive communication can occur with relatively lower transmitting power.

2. Access control system according to claim 1,
**characterized in that**
only one frequency, preferably a frequency in the range of 13.56 MHz, is used for the bidirectional wireless communication between the access-side control device and the user-side identification device.

3. Access control system according to claim 2,
**characterized in that**
the power storage means comprise at least a rechargeable battery.

4. Access control system according to claim 2 or 3,
**characterized in that**
the power storage means comprise at least a capacitor.

5. Access control system according to any one of claims 2 to 4, **characterized in that**
the semi-passive transponder operates for the bidirectional wireless communication with the control device at only one frequency, preferably a frequency in the range of 13.56 MHz.

6. Access control system according to any one of claims 2 to 5, **characterized in that**
for the bidirectional wireless communication between the control device and the identification device a wide band spectrum having a carrier frequency of preferably 13.56 MHz or a frequency hopping method is used.

7. Access control system according to any one of claims 2 to 6, **characterized in that**
means are provided to generate a rotating three-dimensional magnetic field inside the vehicle.

8. Access control system according to any one of claims 2 to 7, **characterized in that**
the user-side identification device has allocated a three-dimensional receiver, preferably operating at a frequency in the range of 13.56 MHz.

9. Access control system according to any one of claims 2 to 8, **characterized in that**
in particular in the case of using a wide band spectrum for protection against use of one or more relay stations by unauthorized persons, means are provided for propagation time measurement, preferably corresponding to a frequency in the range of 13.56 MHz.

10. Access control system according to any one of claims 2 to 9, **characterized in that**
means are provided for protection against use of one or more relay stations by unauthorized persons, based on given geometrical and time-related characteristics of the generated rotating three-dimensional magnetic field inside the vehicle.

## Revendications

1. Système de contrôle d'accès, en particulier pour véhicules automobiles, comprenant un dispositif de commande du côté accès, un dispositif d'identification du côté utilisateur, et un émetteur/récepteur associé au dispositif de commande pour une communication sans fil bidirectionnelle avec le dispositif d'identification,
**caractérisé en ce qu'**au dispositif d'identification côté utilisateur, en vue de la communication sans fil bidirectionnelle avec le dispositif de commande côté accès, est associé un transpondeur semi-passif séquentiel qui, tout comme un transpondeur classique, est alimenté en énergie via le dispositif de commande côté accès, dont la puissance d'émission, par comparaison à la puissance d'émission d'un tel transpondeur classique, est cependant augmentée par des moyens d'accumulation d'énergie ou similaires pour une communication dite active, cependant lorsque le dispositif d'identification se trouve à l'extérieur du véhicule, une communication active a lieu avec une puissance d'émission relativement plus élevée, tandis que lorsque le dispositif d'identification se trouve à l'intérieur du véhicule, il peut se produire aussi bien une communication active qu'une communication passive avec une puissance d'émission relativement plus faible.

2. Système de contrôle d'accès selon la revendication 1,
charactérisé en ce que, pour la communication sans fil bidirectionnel entre le dispositif de commande côté accès et le dispositif d'identification côté utilisateur, le système utilise une fréquence unique, de préférence une fréquence dans la plage de 13,56 MHz.

3. Système de contrôle d'accès selon la revendication 2,
charactérisé en ce que les moyens d'accumulation d'énergie comprennent au moins une batterie rechargeable.

4. Système de contrôle d'accès selon la revendication 2 ou 3,
charactérisé en ce que les moyens d'accumulation d'énergie comprennent au moins un condensateur.

5. Système de contrôle d'accès selon l'une des revendications 2 à 4 3,
charactérisé en ce que le transpondeur semi-passif pour la communication sans fil bidirectionnelle avec le dispositif de commande fonctionne à une fréquence unique, de préférence une fréquence dans la plage de 13,56 MHz.

6. Système de contrôle d'accès selon l'une des revendications 2 à 5,
charactérisé en ce que, pour la communication sans fil bidirectionnelle entre le dispositif de commande et le dispositif d'identification, le système utilise un spectre à large bande autour d'une fréquence porteuse de préférence de 13,56 MHz, ou un processus à saut de fréquence.

7. Système de contrôle d'accès selon l'une des revendications 2 à 6,
charactérisé en ce qui est prévu des moyens pour générer à l'intérieur du véhicule un champ magnétique tridimensionnel en rotation.

8. Système de contrôle d'accès selon l'une des revendications 2 à 7,
charactérisé en ce qu'un récepteur tridimensionnel, fonctionnant de préférence autour d'une fréquence dans la plage de 13,56 MHz, est associé au dispositif d'identification côté utilisateur.

9. Système de contrôle d'accès selon l'une des revendications 2 à 8,
charactérisé en ce que, en particulier dans le cas de l'utilisation d'un spectre à large bande, pour la protection contre l'utilisation d'une ou plusieurs stations relais par des personnes non autorisées, il est prévu des moyens pour une mesure de temps de parcours, correspondant de préférence à une fréquence dans la plage de 13,56 MHz.

10. Système de contrôle d'accès selon l'une des revendications 2 à 9,
charactérisé en ce qu'il est prévu des moyens de pour la protection contre l'utilisation d'une ou plusieurs stations relais par des personnes non autorisées, qui sont basés sur des propriétés géométriques et temporelles déterminées du champ magnétique tridimensionnel en rotation engendré à l'intérieur du véhicule.
